# EUROPÄISCHE PATENTSCHRIFT

(11) **EP 0 685 397 B1**
(45) Veröffentlichungstag und Bekanntmachung des Hinweises auf die Patenterteilung: **06.08.1997**
(21) Anmeldenummer: 95108381.5
(22) Anmeldetag: 29.05.1995
(51) Int. Cl.: B65B 51/04, A22C 11/12

(54) **Vorrichtung zum Herstellen von gefüllten verschlossenen Schlauchbeutelpackungen**
Apparatus for making filled, closed bag-like tubular packages
Dispositif pour la fabrication de sachets d'emballage tubulaires remplis et fermés

(30) Priorität: 31.05.1994 DE 4418894
(43) Veröffentlichungstag der Anmeldung: 06.12.1995
(73) Patentinhaber: Knieriem, Günther, Dipl.-Ing., D-68526 Ladenburg (DE)
(72) Erfinder: Knieriem, Günther, Dipl.-Ing., D-68526 Ladenburg (DE)
(74) Vertreter: Gornott, Dietmar, Dipl.-Ing.

(56) Entgegenhaltungen:
- US-A- 3 079 067
- US-A- 3 852 939

## Beschreibung

Die Erfindung betrifft eine Vorrichtung zum Herstellen von gefüllten, verschlossenen Schlauchbeutelpackungen aus einem gefüllten Schlauch, wobei der gefüllte Schlauch zur Bildung der Enden jeweils zweier aufeinanderfolgender Schlauchbeutelpackungen gerafft wird und der geraffte Bereich des Schlauchs mit zwei voneinander beabstandeten Clips umschlingend verschlossen wird, wobei zwei Gruppen von Rafferblechen von zwei gegenüberliegenden Seiten gegen den zu raffenden Bereich des Schlauchs verschiebbar sind und wobei Vorrichtungen zum Schneiden und Biegen der Clips und zum Transport der gebogenen Clips zum gerafften Bereich des Schlauchs vorgesehen sind.

Zum Verschließen von Schlauchbeutelpackungen oder Würsten werden überwiegend Aluminium-Verschlüsse - sogenannte Clips - eingesetzt. Diese werden nicht beim Verbraucher, sondern separat hergestellt. Dabei wird der Draht geschnitten und zu U-förmigen Clip-Verschlüssen geformt. Diese fertigen Clip-Verschlüsse werden dann zur besseren Handhabung mittels Klebestreifen am Fuß zu sogenannten Clip-Riegeln verbunden und gelangen so in den Handel.

Vor der Verwendung der Clips werden die Clip-Magazine der Doppelverschließvorrichtungen mit diesen Clip-Riegeln aufgefüllt. Beim Verarbeiten werden die Clips vereinzelt und die geraffte Folie umschlingend verschlossen. Diese Clip-Magazine haben ein begrenztes Volumen von etwa 400 Stück, d.h. bei einer Abfülleistung von 20 Stück pro Minute ist das Magazin nach 20 Minuten Betriebszeit leer und muß neu befüllt werden. Dieses führt stets zu kurzen Produktionsunterbrechungen (DE 826843, EP 0 135 238).

Eine Verbesserung wurde erzielt, als man dazu überging, die Herstellvorrichtung für die U-förmigen Clips einer kombinierten Form-, Füll-, Verschließ- und Trennvorrichtung für Schlauchbeutel vorzulagern oder diese miteinander zu verbinden. In einer externen Vorrichtung werden dabei die beiden Aluminiumdrähte von den beiden Drahtrollenmagazinen abgezogen, in abgelängte Stücke geschnitten und zu je zwei U-förmigen Clip-Verschlüssen geformt. Die vorgefertigten Clip-Verschlüsse werden dann zum Verschließen der Packungen in die Verschließvorrichtung, die in der Abfüllanlage integriert ist, eingeführt. Bei diesem Verfahren wird der Folienschlauch kontinuierlich transportiert. Die Verschließvorrichtung muß während des Raff- und Verschließvorganges mit der Folie mitgeführt werden, d.h., während die Verschlüsse stationär extern geschnitten werden, führt die Verschließvorrichtung eine ständige Hin- und Herbewegung aus.

Die Verschließvorrichtung ist mit der Gesamtanlage über die Mechanik fest verbunden und ist ein Bestandteil dieser Anlage. Die Schneidvorrichtung zum Vereinzeln der Packungen, d.h. zum Trennen der Folie zwischen den Verschlüssen, ist der Verschließvorrichtung nachgeschaltet, ist aber ebenfalls mit dieser mechanisch verbunden, d.h. die vorgeschaltete stationäre Verschluß-Formstation, die nachgeschaltete externe Schneidestation zum Vereinzeln der Packungen und vor allem die ständig hin und her zu bewegende Verschließstation sind mit der Schlauchbeutel-Abfüllanlage über die Mechanik und die Antriebe fest verbunden. Dieses erfordert einen hohen technischen Aufwand. Ein Einsatz dieser Verschlußherstell-, Verschließ- und Trennvorrichtung in einer Schlauchbeutel-Abfüllanlage anderen Fabrikats ist praktisch nicht durchführbar (US-PS 2,831,302, 3,149,447, 3,324,621, 3,795,083, 3,992,854, DE 28 48 706).

Eine Vorrichtung gemäß dem Oberbegriff des Hauptanspruchs ist in US 3,079,067 beschrieben. Dabei sind Vorrichtungen zum Schneiden und Biegen der Clips aus bandförmigem Rohmaterial oberhalb, zwischen und unterhalb der Rafferbleche vorgesehen. Zum Antrieb dieser Vorrichtung dienen zwei Pneumatikzylinder.

Der Erfindung liegt die Aufgabe zugrunde, eine Vorrichtung zum Herstellen von Schlauchbeutelpackungen anzugeben, bei welcher die Clips unmittelbar aus dem dafür vorgesehenen Draht geformt werden, so daß eine Herstellung, ein Transport sowie ein häufiges Nachladen der Clip-Riegel entfallen können, und bei welcher zum Schneiden, Biegen und Transportieren von Clips innerhalb der Verschließvorrichtung ein möglichst geringer Aufwand an Antriebs- und Steuerungsmitteln erforderlich ist.

Diese Aufgabe wird bei der erfindungsgemäßen Vorrichtung dadurch gelöst, daß jeweils aus feststehenden und aus beweglichen Teilen bestehende Vorrichtungen zum Schneiden und Biegen des für die Clips vorgesehenen Drahts außerhalb der äußeren Rafferbleche angeordnet sind, wobei die beweglichen Teile auf den Außenseiten der äußeren Rafferbleche montiert sind, daß die äußeren Rafferbleche eine größere Dicke als die anderen Rafferbleche aufweisen und daß jeweils ein Stößel mit einer Arbeitsrichtung senkrecht zu den äußeren Rafferblechen derart antreibbar und ausgebildet ist, daß die U-förmigen Clips von den Vorrichtungen zum Biegen durch je eine Öffnung in den äußeren Rafferblechen in die Transportvorrichtung gestoßen werden.

Diese Vorrichtung zeichnet sich durch eine kompakte Bauform aus und ermöglicht eine einfache Zuführung der U-förmig gebogenen Clips zum gerafften Bereich. Damit ist die Vorrichtung auch leichter und preiswerter als bekannte Vorrichtungen. Ferner ist sichergestellt, daß die äußeren Rafferbleche durch die zum Schneiden und Biegen erforderliche Kraft nicht verformt werden.

Damit trotzdem möglichst wenig Füllmasse durch die Raffung verdrängt wird, ist bei einer Weiterbildung der erfindungsgemäßen Vorrichtung vorgesehen, daß die äußeren Rafferbleche an den mit dem Schlauch in Berührung kommenden Kanten bezüglich ihrer Dicke angeschrägt sind.

Bei der erfindungsgemäßen Vorrichtung ist vorzugsweise vorgesehen, daß die Transportvorrichtung aus einer Führungsnut für den U-förmigen Clip und einem Schieber besteht, der beim Erreichen der zum Biegen erforderlichen Position des U-förmigen Clips fixiert wird. Dadurch wird ein einwandfreies Verschließen durch den anschließenden Biegevorgang mit Hilfe eines gegen den Schieber wirkenden Schließeisens gewährleistet.

Eine sichere Fixierung wird bei einer vorteilhaften Ausgestaltung der Weiterbildung dadurch erreicht, daß zum Antrieb des Schiebers ein Riegel mit einer Arbeitsrichtung senkrecht zu den äußeren Rafferblechen eine schräge Fläche aufweist, die mit dem Schieber derart in Wirkverbindung steht, daß durch die schräge Fläche eine Bewegung des Schiebers in Richtung auf die zum Biegen erforderliche Position und durch eine an die schräge Fläche angrenzende Seitenfläche des Riegels eine Fixierung des Schiebers erfolgt.

An die Abdichtung der folienumschlingenden Verschlüsse werden insbesondere bei reaktiven Füllgütern, wie Dichtstoffen usw. hohe Ansprüche gestellt. Im direkten Zusammenhang hiermit steht die Lagerstabilität der Packungen. Des weiteren kann es durch die Erwärmung der Packungen, durch Preßdruck bei der Lagerung oder beim Verarbeiten zu Überdruck in der Packung kommen, der ein Abrutschen oder Aufbiegen des Verschlusses und damit ein Auslaufen des Füllguts zur Folge hat. Es wäre daher wichtig, daß der Verschluß möglichst fest auf der Folie sitzt und der Öffnungswiderstand des Verschlusses möglichst hoch ist, um ein Aufbiegen des Verschlusses bei erhöhtem Innendruck zu verhindern.

Dieses wird bei einer Weiterbildung dadurch erzielt, daß ein zum Verschließen des Clips vorgesehenes Schließeisen auf der der Transportvorrichtung entgegengesetzten Seite angeordnet und derart geformt ist, daß die Schenkel des U-förmigen Clips im gebogenen Zustand nebeneinanderliegen.

Eine andere vorteilhafte Ausgestaltung der erfindungsgemäßen Vorrichtung besteht darin, daß die Rafferbleche gruppenweise gegenläufig mit Hilfe eines Kurbeltriebes antreibbar sind. Dadurch ist sichergestellt, daß der zugeführte gefüllte Schlauch mittig gerafft wird und daß auf die äußeren Rafferbleche eine zum Schneiden und Biegen des Drahtes ausreichende Kraft wirkt. Es ist im Rahmen der Erfindung jedoch auch die Anwendung eines Kettenantriebes möglich.

Der zugeführte Draht muß zwar der Bewegung der äußeren Rafferbleche weitgehend folgen, das zugeführte unvereinzelte Drahtstück sollte jedoch nicht verformt werden. Dieses kann bei der erfindungsgemäßen Vorrichtung dadurch vermieden werden, daß der Draht von jeweils einer Vorratsrolle über ein Rohr der Vorrichtung zum Schneiden zuführbar ist, wobei das Rohr pendelnd in einem Drehpunkt aufgehängt ist, der nahe der Eintrittsöffnung des Rohres für den Draht liegt, und die Austrittsöffnung des Rohres der Bewegung des Rafferblechs im wesentlichen folgt.

Um eine erfindungsgemäße Vorrichtung als Zusatzvorrichtung auf beliebigen Schlauchbeutel-Abfüllanlagen einzusetzen, ist bei einer anderen Weiterbildung vorgesehen, daß die Vorrichtung als eine in sich geschlossene Baugruppe ausgebildet ist, die als Zusatzvorrichtung auf Schlauchbeutel-Abfüllanlagen montierbar ist.

Ferner ist bei der erfindungsgemäßen Vorrichtung besonders vorteilhaft, wenn ein Messer zur Trennung der Schlauchbeutelpackungen gegenüber den die Vorrichtungen zum Schneiden und Biegen tragenden Rafferblechen angeordnet ist.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung eines Ausführungsbeispiels,
- Fig. 2: den gerafften Bereich zwischen zwei Schlauchbeutelpackungen bei geschlossenen Rafferblechen,
- Fig. 3: den gleichen Bereich nach der Formung der Clips vor dem Vereinzeln der Schlauchbeutelpackungen,
- Fig. 4: eine schematische Darstellung einer Einzelheit der Vorrichtung nach Fig. 1 und
- Fig. 5: eine weitere Einzelheit der Vorrichtung nach Fig. 1, ebenfalls in schematischer Darstellung.

Gleiche Teile sind in den Figuren mit gleichen Bezugszeichen versehen.

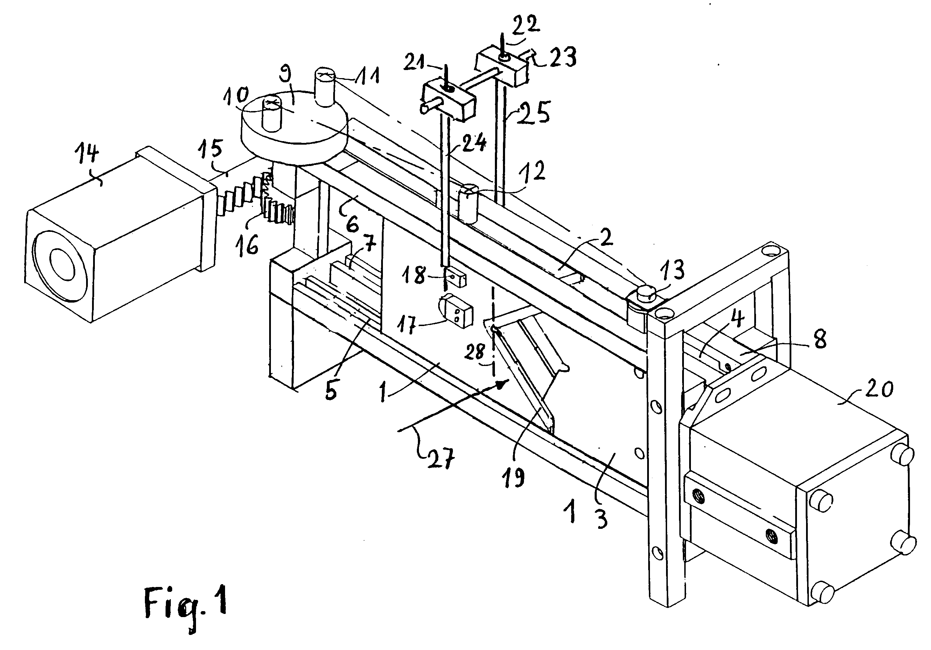

Bei der erfindungsgemäßen Vorrichtung nach Fig. 1 laufen vier Rafferbleche 1, 2, 3, 4 in Führungsschienen 5, 6, 7, 8 und werden gegenläufig über ein Kurbelgetriebe angetrieben. Das Kurbelgetriebe besteht aus einer Kurbelscheibe 9 mit zwei Kurbelzapfen 10, 11, die über nur angedeutete Kurbelstangen mit Zapfen 12, 13 in Verbindung stehen. Der Zapfen 12 ist starr mit den Rafferblechen 1, 2 verbunden, während der Antrieb der Rafferbleche 3, 4 über den Zapfen 13 erfolgt. Zum Schließen und Öffnen der Rafferbleche wird die Kurbelscheibe 9 von einem Pneumatik-Zylinder 14 über eine Zahnstange 15 und ein Zahnrad 16 in entsprechend alternierende Rotation versetzt. Von den Schneid- und Biegevorrichtungen, die auf dem Rafferblech 1 angeordnet sind, sind lediglich ein Biegestempel 17 und ein Schneidblock 18 in Fig. 1 dargestellt.

Da für das Schneiden und Biegen erhebliche Kräfte aufzuwenden sind, sind die äußeren Rafferbleche 1, 2, die mit Schneid- und Biegevorrichtungen versehen sind, dicker als die übrigen Rafferbleche ausgebildet. Damit jedoch beim Raffen nicht unnötig viel vom Inhalt der Schlauchbeutelpackungen aus dem gerafften Bereich herausgepreßt wird, wird der geraffte Bereich möglichst kurz gehalten, wozu die äußeren Rafferbleche 1, 2 an den den Schlauch berührenden Kanten angeschrägt sind -beispielsweise bei 19.

Ein weiterer Pneumatik-Zylinder 20 dient bei der Vorrichtung nach Fig. 1 zur Betätigung zweier ansonsten in Fig. 1 nicht dargestellter Schließeisen für die Clips.

Den Schneid- und Biegevorrichtungen auf den Rafferblechen 1, 2 wird der Draht 21, 22 von jeweils einer nicht dargestellten Vorratsrolle über je ein um eine Achse 23 pendelndes Rohr 24, 25 zugeführt. Diese Rohre stabilisieren den Draht im Bereich vor der Schneidvorrichtung 18, damit er nicht bei den durch das Schneiden auftretenden Biegemomenten verformt wird. Der Innendurchmesser der Rohre 24, 25 ist so groß gewählt, daß die Drähte 21, 22 leicht hindurchgeführt werden können.

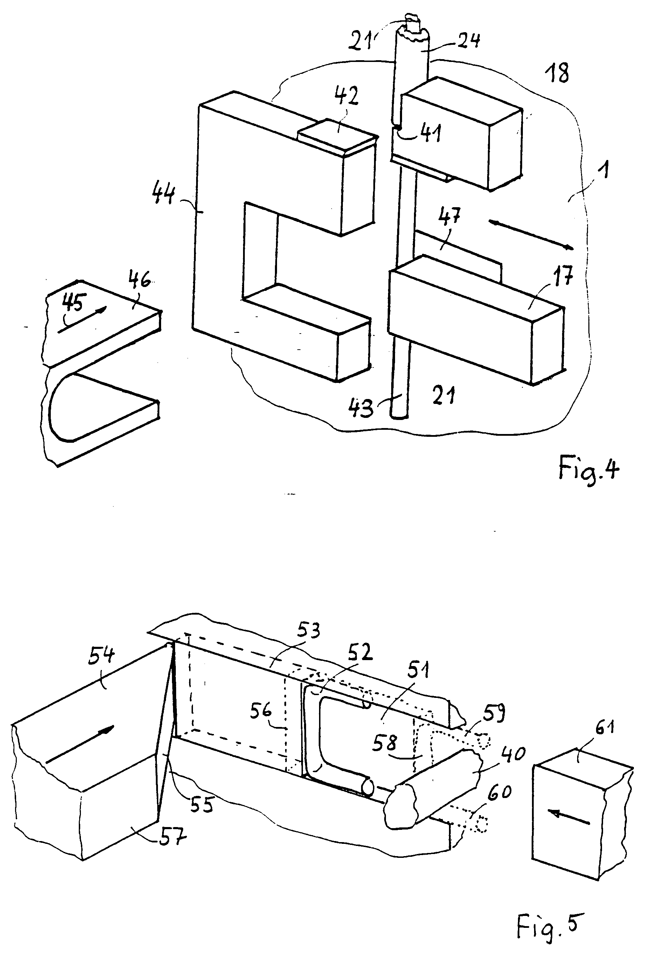

Zu dem Schneidblock 18 und dem Biegestempel 17 gehört eine feststehende Schneide und eine Biegematrize, die ortsfest auf einer an den Führungsschienen 5, 6 befestigten Strebe angeordnet sind, die in Fig. 1 lediglich angedeutet ist. Eine genauere Beschreibung der Schneid- und Biegevorrichtung sowie einer in Fig. 1 nicht dargestellten Transportvorrichtung für die Clips erfolgt später im Zusammenhang mit den Figuren 4 und 5. Der gefüllte zu verarbeitende Schlauch wird in Richtung des Pfeils 27 durch die Vorrichtung hindurchgeführt.

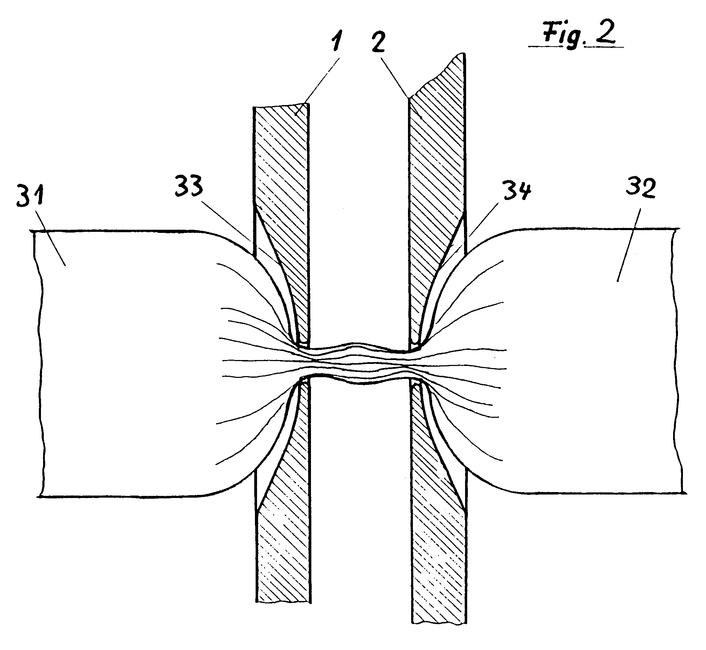

Fig. 2 zeigt die Raffung des Schlauchs zur Bildung der Enden jeweils zweier aufeinanderfolgender Schlauchbeutelpackungen 31, 32, wobei lediglich die äußeren Rafferbleche 1, 2 dargestellt sind. Die wegen der Belastung durch das Schneiden und Biegen der Clips verstärkt ausgeführten äußeren Rafferbleche 1, 2 sind an der in Fig. 1 dargestellten gestrichelten Linie 28 geschnitten. Die Rafferbleche sind bei 33, 34 abgeschrägt, so daß die Raffung nicht eine unnötig lange Strecke einnehmen muß, wobei viel Füllgut zu verdrängen wäre.

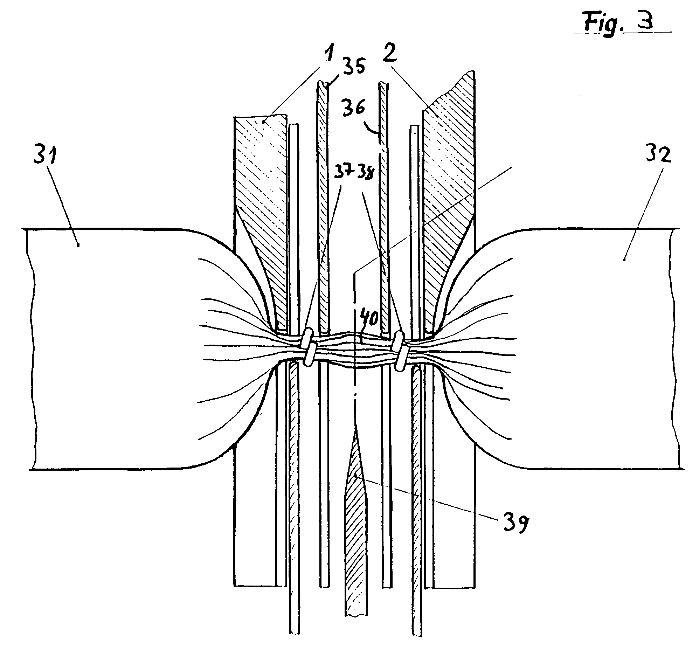

Fig. 3 zeigt die gleiche Stelle der Vorrichtung nach Fig. 1, jedoch horizontal geschnitten, im geschlossenen Zustand und mit zwei weiteren inneren Rafferblechen 35, 36. In der in Fig. 3 dargestellten Bewegungsphase sind die Clips 37, 38 bereits verformt, so daß die Schlauchbeutelpackungen 31, 32 verschlossen sind. Darauffolgend wird ein Messer 39, durch einen nicht dargestellten Pneumatik-Zylinder 20 (Fig. 1) angetrieben, den gerafften Bereich 40 zertrennen. Erforderlichenfalls kann ein Gegenhalter auf der gegenüberliegenden Seite des gerafften Bereichs 40 angeordnet werden, vorzugsweise aus Kunststoff, gegen den das Messer 39 beim Schneidvorgang fährt.

Fig. 4 zeigt in gegenüber Fig. 1 vergrößerter Darstellung den Biegestempel 17 und den Schneidblock 18 auf dem Rafferblech 1, das in Richtung des Doppelpfeils hin- und herbewegbar ist. Der Schneidblock 18 weist bei 41 einen Absatz auf, so daß bei einer Bewegung nach links (Öffnen der Rafferbleche) der Schneidblock 18 das Führungsrohr 24 des Drahtes 21 und den Draht 21 selbst nach links gegen die Gegenschneide 42 bewegt, so daß das nach unten ragende Ende 43 des Drahtes 21 abgeschnitten wird. Das abgeschnittene Drahtende wird durch die weitere Bewegung des Rafferbleches 1 nach links von dem Biegestempel 17 in die Biegematrize 44 hineingedrückt, so daß sich ein U-förmiger Clip ergibt.

Sobald der Biegevorgang beendet ist, wird der U-förmige Clip von einem durch einen nicht dargestellten Pneumatik-Zylinder in Richtung des Pfeils 45 angetriebenen Stößel 46 durch eine Öffnung 47 im Rafferblech 1 in eine Führungsnut 51 (Fig. 5) in einer hinter dem Rafferblech 1 liegenden Transportvorrichtung gestoßen. Von dort aus wird der U-förmige Clip 52 von einem Schieber 53 in die zum Schließen des Clips erforderliche Position an dem gerafften Schlauch 40 geschoben. Dazu ist an dem von dem Clip 52 abgewandten Ende des Schiebers 53 senkrecht zur Bewegungsrichtung des Schiebers 53 ein Riegel 54 vorgesehen, der in Pfeilrichtung von einem nicht dargestellten Pneumatik-Zylinder angetrieben wird.

Der Riegel 54 weist eine Schräge 55 auf, an der die linke Kante des Schiebers 53 gleitet, wenn der Riegel 54 in Pfeilrichtung bewegt wird. Der Riegel 54 wird soweit bewegt, bis er die punktierte Position erreicht. Dann hat der Clip 52 die zum Verschließen erforderliche Position eingenommen. Die ebenfalls punktiert dargestellte Kante 56 des Schiebers 53 berührt dann nicht mehr die Schräge 55, sondern die Seitenfläche 57 des Riegels 54. Dadurch ist der Schieber 53 und damit der Clip 52 in der eingenommenen Position fixiert, so daß eine von einem Schließeisen 61 ausgehende Kraft den Clip 52 nicht aus der eingenommenen Position bringt. In dieser Position befindet sich der Boden 58 des U-förmigen Clips 52 im Kontakt mit dem gerafften Bereich 40 des Schlauchs. Die Schenkel 59, 60 des Clips können dadurch sauber um den Bereich 40 herumgebogen werden.

## Patentansprüche

1. Vorrichtung zum Herstellen von gefüllten, verschlossenen Schlauchbeutelpackungen aus einem gefüllten Schlauch, wobei der gefüllte Schlauch zur Bildung der Enden jeweils zweier aufeinanderfolgender Schlauchbeutelpackungen (31, 32) gerafft wird und der geraffte Bereich (40) des Schlauchs mit zwei voneinander beabstandeten Clips (37, 38) umschlingend verschlossen wird, wobei zwei Gruppen von Rafferblechen (1, 2, 5, 6, 35, 36) von zwei gegenüberliegenden Seiten gegen den zu raffenden Bereich des Schlauchs verschiebbar sind und wobei Vorrichtungen (17, 18, 42, 44) zum Schneiden und Biegen der Clips und zum Transport (51-56) der gebogenen Clips zum gerafften Bereich des Schlauchs vorgesehen sind, dadurch gekennzeichnet, daß jeweils aus feststehenden und aus beweglichen Teilen bestehende Vorrichtungen (17, 18, 42, 44) zum Schneiden und Biegen des für die Clips vorgesehenen Drahts außerhalb der äußeren Rafferbleche (1, 2) angeordnet sind, wobei die beweglichen Teile (17, 18) auf den Außenseiten der äußeren Rafferbleche (1, 2) montiert sind, daß die äußeren Rafferbleche (1, 2) eine größere Dicke als die anderen Rafferbleche (3, 4, 35, 36) aufweisen und daß jeweils ein Stößel (46) mit einer Arbeitsrichtung senkrecht zu den äußeren Rafferblechen (1, 2) derart antreibbar und ausgebildet ist, daß die U-förmigen Clips (52) von den Vorrichtungen (17, 44) zum Biegen durch je eine Öffnung (47) in den äußeren Rafferblechen (1, 2) in die Transportvorrichtung (51-56) gestoßen werden.

2. Vorrichtung nach Anspruch 1, dadurch gekennzeichnet, daß die äußeren Rafferbleche (1, 2) separat geführt sind.

3. Vorrichtung nach einem der Ansprüche 1 oder 2, dadurch gekennzeichnet, daß die äußeren Rafferbleche (1, 2) an den mit dem Schlauch in Berührung kommenden Kanten bezüglich ihrer Dicke angeschrägt sind.

4. Vorrichtung nach einem der vorhergehenden Ansprüche, dadurch gekennzeichnet, daß die Transportvorrichtung aus einer Führungsnut (51) für den U-förmigen Clip (52) und einem Schieber (53) besteht, der beim Erreichen der zum Biegen erforderlichen Position des U-förmigen Clips (52) fixiert wird.

5. Vorrichtung nach Anspruch 4, dadurch gekennzeichnet, daß zum Antrieb des Schiebers (53) ein Riegel (54) mit einer Arbeitsrichtung senkrecht zu den äußeren Rafferblechen (1, 2) eine schräge Fläche (55) aufweist, die mit dem Schieber (53) derart in Wirkverbindung steht, daß durch die schräge Fläche (55) eine Bewegung des Schiebers (53) in Richtung auf die zum Biegen erforderliche Position und durch eine an die schräge Fläche (55) angrenzende Seitenfläche (57) des Riegels (54) eine Fixierung des Schiebers (53) erfolgt.

6. Vorrichtung nach einem der vorhergehenden Ansprüche, dadurch gekennzeichnet, daß ein zum Verschließen des Clips vorgesehenes Schließeisen (61) auf der der Transportvorrichtung (51, 53, 54) entgegengesetzten Seite angeordnet und derart geformt ist, daß die Schenkel (59, 60) des U-förmigen Clips (52) im gebogenen Zustand nebeneinanderliegen.

7. Vorrichtung nach einem der vorhergehenden Ansprüche, dadurch gekennzeichnet, daß die Rafferbleche (1, 2, 35, 36; 3, 4) gruppenweise gegenläufig mit Hilfe eines Kurbeltriebes (9, 10, 11) antreibbar sind.

8. Vorrichtung nach einem der vorhergehenden Ansprüche, dadurch gekennzeichnet, daß der Draht (21, 22) von jeweils einer Vorratsrolle über ein Rohr (24, 25) der Vorrichtung (18) zum Schneiden zuführbar ist, wobei das Rohr (24, 25) pendelnd in einem Drehpunkt (23) aufgehängt ist, der nahe der Eintrittsöffnung des Rohres (24, 25) für den Draht (21, 22) liegt, und die Austrittsöffnung des Rohres (24, 25) der Bewegung des Rafferblechs (1, 2) im wesentlichen folgt.

9. Vorrichtung nach einem der vorhergehenden Ansprüche, dadurch gekennzeichnet, daß die Vorrichtung als eine in sich geschlossene Baugruppe ausgebildet ist, die als Zusatzvorrichtung auf Schlauchbeutel-Abfüllanlagen montierbar ist.

10. Vorrichtung nach einem der vorhergehenden Ansprüche, dadurch gekennzeichnet, daß ein Messer (39) zur Trennung der Schlauchbeutelpackungen (31, 32) gegenüber den die Vorrichtungen (17, 18) zum Schneiden und Biegen tragenden Rafferblechen (1, 2) angeordnet ist.

## Claims

1. Arrangement for the production of filled, closed hose bag packings made of a filled hose, wherein the filled hose is gathered for the formation of the ends at any one time of two consecutive hose bag packings (31, 32) and the gathered region (40) of the hose is closed by two encircling clips (37, 38) separated from one another, where two groups of gathering plates (1, 2, 5, 6, 35, 36) are movable from two opposite sides against the region of the hose to be gathered and wherein arrangements (17, 18, 42, 44) for cutting and bending of the clips and for transportation (51-56) of the bent clips to the gathered region of the hose are provided, characterized in that arrangements (17, 18, 42, 44) consisting respectively of fixed and movable parts for cutting and bending of the wire provided for the clips are disposed on the outside of the outer gathering plates (1, 2), wherein the movable parts (17, 18) are mounted on the outer sides of the outer gathering plates (1, 2), in that the outer gathering plates are thicker than the other gathering plates (3, 4, 35, 36) and in that at any time a plunger (46) having a direction of operation perpendicular to the outer gathering plates (1, 2) is so drivable and so shaped, that the U-form clips (52) are each pushed by the arrangements (17, 44) for bending through an opening (47) in the outer gathering plates (1, 2) into the transportation arrangement (51-56).

2. Arrangement according to Claim 1, characterized in that the outer gathering plates (1, 2) are separately guided.

3. Arrangement according to any of Claims 1 or 2, characterized in that the outer gathering plates (1, 2) are bevelled at their edges which come into contact with respect to their thickness with the hose.

4. Arrangement according to any of the preceding claims, characterized in that the transportation arrangement consists of a guiding groove (51) for the U-form clip (52) and a slider (52) which is fixed when it has achieved the position necessary for bending the U-form clips (52).

5. Arrangement according to Claim 4, characterized in that for driving the slider (53) a bolt (54) having an operating direction perpendicular to the outer gathering plates (1, 2) has a bevelled surface (55), which is in operative engagement with the slider (53) in such a way that by means of the bevelled surface (55) movement of the slider (53) in the direction to the position necessary for bending occurs and in that fixing of the slider (53) takes place by means of a side surface (57) adjacent to the bevelled surface (55) of the bolt (54).

6. Arrangement according to any of the preceding claims, characterized in that a closure iron (61) for closing the clip is disposed on the side opposite the transportation arrangement (51, 53, 54) and is so formed that the arms (59, 60) of the U-form clips (52) lie next to one another in the bent state.

7. Arrangement according to any of the preceding claims, characterized in that the gathering plates (1, 2, 35, 36; 3, 4) can be driven in groups in opposite directions with the aid of a crank mechanism (9, 10, 11).

8. Arrangement according to any of the preceding claims, characterized in that the wire (21, 22) can be supplied from a reserve roll by way of a tube (24, 25) of the arrangement (18) for cutting wherein the tube (24, 25) is suspended in pendulum fashion at a pivot point (23) which is close to the entry opening of the tube (24, 25) for the wire (21, 22), and the exit opening of the tube (24, 25) substantially follows the movement of the gathering plate (1, 2).

9. Arrangement according to any of the preceding claims, characterized in that the arrangement is formed as a self-contained component part which can be fitted to hose bag filling devices as an accessory part.

10. Arrangement according to any of the preceding claims, characterized in that a knife (39) for the separation of the hose bag packings (31, 32) is disposed opposite the gathering plates (1, 2) carrying the arrangements (17, 18) for cutting and bending.

## Revendications

1. Dispositif pour la fabrication d'emballages sous forme de sachets tubulaires remplis et fermés à partir d'un tuyeau flexible rempli, ce tuyeau flexible étant ramassé pour former à chaque fois les bouts de deux emballages sous forme de sachets successifs (31, 32) et la zone rammassée (40) du tuyeau étant fermée par deux agrafes (37, 38), celles-ci se trouvant à distance l'une par rapport à l'autre tout en formant une boucle, comportant deux groupes de tôles de ramasságe (1, 2, 5, 6, 35, 36), qui sont déplaçables à partir de deux côtés opposés vers la zone à ramasser du tuyeau, et étant pourvu de dispositifs (17, 18, 42, 44) pour découper et recourber des agrafes et pour transporter (51 - 56) les agrafes recourbées vers la zone ramassée du tuyeau, caractérisé en ce que des dispositifs (17, 18, 42, 44), chacun comprenant des parties stationnaires et et des parties mobiles pour découper et recourber le fil pourvu pour les agrafes, sont arrangés à l'extérieur des tôles de ramassage extérieures (1, 2), les parties mobiles (17, 18) étant montées sur les côtés extérieurs des tôles de ramassage extérieures (1, 2), que les tôles de ramassage extérieures (1, 2) ont une épaisseur plus forte que les autres tôles de ramassage (3, 4, 35, 36) et qu'un coulisseau (46) respectif ayant une direction de travail perpendiculaire par rapport aux tôles de ramassage extérieures (1, 2) est commandable et formé de sorte que les agrafes en U (52) soient poussées par les dispositifs de recourbement (17, 44) dans le dispositif de transport (51 - 56) à travers une orifice (47) respective dans les tôles de ramassage extérieures (1, 2).

2. Dispositif suivant la revendication 1, caractérisé en ce que les tôles de ramassage extérieures (1, 2) sont guidées séparément.

3. Dispositif suivant une des revendications 1 ou 2, caractérisé en ce que les tôles de ramassage extérieures (1, 2) présentent, concernant leur épaisseur, une forme oblique au niveau des arêtes qui entrent en contact avec le tuyeau.

4. Dispositif suivant une des revendications mentionnées ci-dessus, caractérisé en ce que le dispositif de transport est composé d'une rainure de guidage (51) pour l'agrafe en U (52) et d'un curseur (53) qui est fixé lorsque la position requise pour le recourbement de l'agrafe en U (52) est atteinte.

5. Dispositif suivant la revendication 4, caractérisé en ce que, pour la commande du curseur (53), un verrou (54) ayant une direction de travail perpendiculaire par rapport aux tôles de ramassage extérieures (1, 2) possède une surface oblique (55), qui est en contact avec et actionne sue le curseur (53), tel que la surface oblique (55) effectue un mouvement du curseur (53) vers la position requise pour le recourbement et qu'une surface latérale (57) du verrou (54) adjacente à la surface oblique (55) effectue la fixation du curseur (53).

6. Dispositif suivant une des revendications mentionnées ci-dessus, caractérisé en ce que le profilé de fermeture (61) pourvu pour fermer l'agrafe est arrangé sur le côté opposé du dispositif de transport (51, 53, 54) et est formé de sorte que les branches (59, 60) de l'agrafe en U (52) soient juxtaposées en état recourbé.

7. Dispositif suivant une des revendications mentionnées ci-dessus, caractérisé en ce que les tôles de ramassage (1, 2, 35, 36; 3, 4) peuvent être commandées par groupes à mouvements contraires moyennant une commande à manivelle (9, 10, 11).

8. Dispositif suivant une des revendications mentionnées ci-dessus, caractérisé en ce que le fil (21, 22) peut être amené au dispositif de découpage (18) à partir d'une bobine d'alimentation respective par l'intermédiaire d'un tube (24, 25), ce tube (24, 25) étant suspendu comme une pendule à un point de rotation (23) qui est situé près de l'orifice d'entrée du tube (24, 25) pour le fil (21, 22), et que l'orifice de sortie du tube (24, 25) suit essentiellement le mouvement de la tôle de ramassage (1, 2).

9. Dispositif suivant une des revendications mentionnées ci-dessus, caractérisé en ce que le dispositif est construit sous forme d'ensemble compact qui peut être monté comme dispositif supplémentaire sur les installations de mise en sachets tubulaires.

10. Dispositif suivant une des revendications mentionnées ci-dessus, caractérisé en ce qu'un couteau (39) pour la séparation des sachets tubulaires (31, 32) est arrangé en face des tôles de ramassage (1, 2) qui portent les dispositifs (17, 18) de découpage et de recourbement.
